# EUROPEAN PATENT APPLICATION

(11) **EP 4 574 471 A1**
(43) Date of publication of application: **25.06.2025**
(21) Application number: 24220954.2
(22) Date of filing: 18.12.2024
(51) Int. Cl.: B60G 15/12, B62D 21/11, B60G 11/28, B60G 13/00

(54) **AIR SUSPENSION BRACKET, BRACKET ASSEMBLY, AND TRUCK**

(30) Priority: 19.12.2023 NL 2036582
(71) Applicant: DAF Trucks N.V., 5643 TW Eindhoven (NL)
(72) Inventor: KOPER, Benjamin Martinus Maria, 5643 TW Eindhoven (NL)
(74) Representative: V.O.

(57) **Abstract**

Disclosed herein are a bracket for coupling an air suspension system of a truck to a chassis of the truck, a bracket assembly comprising such a bracket, and a truck comprising such a bracket assembly. The bracket comprises a base plate with a first section comprises an air spring mount, and a second section comprising a spring-damper mount. The second section further comprises a cross member mount. When installed on the truck, the cross member mount extends in a first vertical direction for mounting the cross member at a vertical offset below the longitudinal chassis members.

## Description

The invention relates to a bracket for coupling an air suspension system of a truck to a chassis of the truck. The invention further relates to a bracket assembly comprising such a bracket. The invention further relates to a truck comprising such a bracket assembly.

To reduce the environmental impact of trucks, especially for trucks larger than 6 tonnes gross vehicle weight, electrification of the drive train is a development area that is of rising interest. Trucks driven by an electric drive train can provide advantages, such as zero emission by the vehicle and reduced operational costs, however potentially at the expense of reduced power and range.

Compared to conventional internal combustion engine (ICE) powered trucks, additional space and weight budget may be needed e.g. to carry battery packs and/or fuel cells, to provide an electric or hybrid truck with an acceptable driving range. As a result, in trucks with an electric drive train the load on the axles may be significantly larger, e.g. at least 25% larger, than in trucks with a fossil fuel-based drive train. Dynamic loads on the axle, e.g. during cornering, braking, and driving over uneven road surfaces, may be even larger. The increased weight of electric or hybrid trucks may require a suspension system able to handle the increased axle loads.

To ensure good drivability and comfortable ride quality in different driving conditions, it is known to have the trucks fully air suspended to allow the stiffness and damping characteristics of the suspension system to be controlled, e.g. to adapt to variations in weight and load distribution of the truck. However, known air suspension systems are designed for ICE powered trucks, where the axle loads are relatively low.

It is a challenge to provide a full air suspension system that is able to handle increased axle loads of a truck, in particular an electric or hybrid electric truck, and to package such an air suspension system in the layout of the truck with a minimal footprint.

### SUMMARY

In summary, the present invention provides a compact solution for packaging a fully air suspended axle of a vehicle, such as an electric or hybrid truck, with an increased axle load capacity. The scope of this patent is defined by the appended claims.

Aspects of the present disclosure relate to a bracket for coupling an air suspension system of a truck to a chassis of the truck. Said chassis comprises a pair of longitudinal chassis members that extend along a longitudinal direction, and said air suspension system comprises an air spring element and a spring-damper unit for movably suspending the chassis to an axle of the truck in a vertical direction. The axle laterally extends below the longitudinal chassis members.

The bracket comprises a base plate that is mountable to a lateral side surface of one of the longitudinal chassis members. Said base plate comprises a first section arranged for mounting the air spring element, and a second section for mounting the spring-damper unit.

The first section comprises an air spring mount arranged for mounting the air spring element to the chassis. When installed on the truck, the air spring mount extends in a first lateral direction for mounting the air spring element below the longitudinal chassis member.

The second section comprises a spring-damper mount arranged for mounting the spring-damper unit to the chassis. When installed on the truck, the spring-damper mount extends in a second lateral direction opposite to the first lateral direction for mounting the spring-damper unit besides the air spring element, at a lateral offset from the longitudinal chassis member.

The second section further comprises a cross member mount for mounting a cross member between the longitudinal chassis members. When installed on the truck, the cross member mount extends in a first vertical direction for mounting the cross member at a vertical offset below the longitudinal chassis members.

Accordingly, the bracket provides a compact solution to equip the truck with a full air suspension, wherein the load capacity of an air spring is augmented by an additional spring-damper unit arranged for supporting an extra load, to increase the load capacity of the suspension system. The air spring element may form a first single strut between the axle and the chassis, while the spring-damper unit as described herein comprises a further spring element and a damper element integrated together, to form a second single strut between the axle and the chassis. In other words, the bracket described herein provides two mounts, i.e. the air spring mount and the spring-damper mount, to which two load bearing elements of the suspension can be mounted, at least one of said load bearing elements comprising a damping function. Preferably, the further spring element of the spring-damper unit is an air spring as well, such as to provide a fully air suspended axle. The air spring mount and the spring-damper mount are part of a single combination structure, i.e. the bracket, for mounting both the air spring element, as well as the spring-damper unit, e.g. adjacent, side-by-side, or parallel to each other. In this way, the suspension system can have a relatively large load capacity without using large size or diameter air spring elements. For example, the air spring mount may be configured to carry a first percentage of the axle load to the chassis, while the spring-damper mount may be configured to carry the remaining percentage of the axle load. Preferably, compared to the spring-damper mount, the air spring mount is arranged to carry a larger part of the axle load, e.g. more than 50%, preferably more than 70%, e.g. between 70-80%, of the axle load.

Since the spring-damper mount is arranged for mounting the spring-damper unit at a lateral offset from the longitudinal chassis member, under load the spring-damper unit portion of the suspension force on the bracket causes a torsional moment on the longitudinal chassis member, about the longitudinal direction. By having the cross member mount extending vertically downward from the bracket, a cross member can be mounted below and between the longitudinal chassis members to counteract this torsional moment. By combining the air spring mount and the spring-damper mount with the cross member mount in a single bracket structure, a stiff connection is provided that reinforces the longitudinal chassis members to handle the torsional moments from the suspension elements with minimal deformation, e.g. wrenching, of the longitudinal chassis members.

Preferably, the cross member mount provides a torsional reinforcement of the second section, e.g. about the longitudinal direction, for transferring a suspension force from the spring-damper unit to the cross member. For example, the cross member mount comprises one or more ribs, or flanges that are upstanding laterally from the base plate and that extend in the vertical direction, e.g. from the cross member mount towards the spring-damper mount.

To further stiffen the connection with the longitudinal chassis members without increasing the mass of the bracket, the cross member mount may be substantially aligned with the spring-damper mount in the longitudinal direction. In other words, the cross member mount is substantially in plane with the spring-damper mount, wherein the plane is normal to the longitudinal direction. In this way, the length of the force path between the spring-damper mount and the cross member mount is minimized, thereby reducing deformation of the bracket as well as the longitudinal chassis member under load.

In some embodiments, the cross member mount comprises a substantially flat mounting surface for mounting the cross member, wherein said mounting surface is normal to the longitudinal direction. In this way, the cross member mount is configured to securely mount a plate shaped cross member, e.g. by a bolted and/or pinned connection between the plate shaped cross member and the mounting surface of the cross member mount.

When the bracket is installed on the truck, i.e. mounted to the longitudinal chassis member, the spring-damper mount may extend in a second vertical direction opposite to the first vertical direction for mounting the spring-damper unit at a vertical offset above the longitudinal chassis members. The vertical offset can e.g. be extended or shortened in dependence of the design of the spring-damper unit. For example, the vertical offset may be relatively large to accommodate longer types of spring-damper unit, e.g. with an increased load capacity or stroke. Conversely, the vertical offset may be relatively small to accommodate shorter types of spring-damper unit, e.g. for packaging reasons.

Preferably, when the bracket is installed on the truck, the air spring mount abuts a bottom surface of the longitudinal chassis member, and the air spring mount is substantially aligned with the longitudinal chassis member in the lateral direction. Accordingly, suspension forces on the air spring mount are directly transferred to the longitudinal chassis member, without creating a torsional moment about the longitudinal direction on the longitudinal chassis member. As a result, the force on the air spring mount does not need to be counteracted by the cross member. Hence, the load on the cross member mount, as well as on the cross member, is limited.

Optionally, the cross member mount comprises a panhard rod mount for pivotably mounting a panhard rod to the chassis. A panhard rod (also called panhard bar, track bar, or track rod) is a suspension link that constrains the lateral location of the axle. While the suspension system allows relative movement between the axle and the chassis of the truck in the vertical direction, the panhard rod is designed to prevent lateral movement of the axle with respect to the chassis. In general, it comprises a rigid bar which, when mounted, runs laterally in about the same plane as the axle, connecting one end of the axle to the chassis on the opposite side of the vehicle. The panhard rod may attach on either end with pivot connections that let it swivel upwards and downwards with a movement of the axle in the vertical direction. While constraining lateral movement of the axle, an axial force may be induced in the panhard rod. By providing the panhard rod mount on the cross member mount, said axial forces can efficiently be directed towards the longitudinal chassis members, e.g. via a cross member mounted to the cross member mount.

In preferred embodiments, the base plate, the air spring mount, the spring-damper mount and the cross member mount are integrally formed as a single part, e.g. forming a combination bracket with a plurality of integrated mounts. In this way, the chance of assembly errors and loose or failed internal connections can be reduced, to provide a stiff and reliable bracket structure. For example, the bracket may be molded or cast as a single part. Optionally, such a single bracket body may be provided with local inserts, e.g. at or near the mounts, to locally reinforce the bracket.

Other aspects of the claimed invention relate to a bracket assembly, comprising a first bracket as described herein, a second bracket as described herein, and a cross member. The base plate of said first bracket is arranged for mounting to a first lateral side surface of one of the longitudinal chassis members. The base plate of said second bracket is arranged for mounting to a second lateral side surface of the other of the longitudinal chassis members, facing away from the first lateral side surface. The cross member is mounted to the cross member mounts of said first and second brackets, respectively. When installed on the truck, the cross member extends laterally across and at a vertical offset below the longitudinal chassis members.

By being coupled to a first and second bracket as described herein, the force guided through the cross member for counteracting torsional moments on the longitudinal chassis members is limited. Accordingly, compared to conventional arrangements, the cross member of the bracket assembly described herein can have a relatively simple design. For example, the cross member may be a reinforced plate, e.g. a single plate comprising one or more reinforcement elements, such as ribs or flanges, to prevent bending or buckling of the cross member. The reinforce plate may e.g. have an I shaped cross section or a T-shaped cross section, comprising a web that when installed on the truck extends in the vertical direction, and flanges that extend in the longitudinal direction.

In some embodiments, the first and/or second bracket comprises an asymmetry for asymmetrically mounting the cross member to the respective cross member mounts of the first and second bracket, wherein, when installed on the truck, the cross member mount of the first bracket is mounted to a first side of the cross member facing a front of the truck, e.g. in a first longitudinal direction, and wherein the cross member mount of the second bracket is mounted to a second side of the cross member facing a rear of the truck, e.g. in a second longitudinal direction. In other words, the first bracket may be different from the second bracket such that, when installed on the vehicle, the cross member is mounted asymmetrically between the opposing cross member mounts. Such an asymmetry can be used to free up space for mounting other components to the bracket assembly and/or to avoid interference with moving parts of the suspension system.

Preferably, in the first bracket, the spring-damper mount and the cross member mount are provided with a first interdistance between each other in the longitudinal direction, while in the second bracket, the spring-damper mount and the cross member are provided with a second interdistance between each other in the longitudinal direction, wherein the second interdistance deviates from the first interdistance. In other words, the first and second bracket are asymmetrical with respect to each other. For example, when installed on the truck, the cross member mounts of the first and second bracket may be provided at different, e.g. non opposing, longitudinal positions on the longitudinal chassis members, such that the cross member extends at a slant, e.g. diagonally, across the longitudinal chassis members, while the air spring mounts and/or spring-damper mounts may be provided at equal, e.g. opposing, longitudinal positions on the longitudinal chassis members.

The bracket assembly may further comprise a panhard rod for constraining a lateral movement of the axle with respect to the chassis. The panhard rod e.g. comprises a first axial end mounted to the first bracket and a second axial end mountable to the axle of the truck at a lateral offset from the first bracket.

Other aspects of the invention as claimed relate to a truck, comprising a chassis, an air suspension system, and a bracket assembly as described herein. The chassis comprises a pair of longitudinal chassis members that extend along a longitudinal direction. The air suspension system comprises an air spring element and a spring-damper unit that movably suspend the chassis to an axle of the truck in a vertical direction. The axle extends laterally below the pair of longitudinal chassis members. The bracket assembly couples the air spring element and spring-damper unit to the chassis. In preferred embodiments, the axle is a fully air suspended front axle of the truck, and the air suspension system is arranged for suspending a chassis load of at least 8000 kg, preferably at least 10000 kg, on the front axle. For example, the truck is an electric or hybrid electric truck, e.g. comprising an electric motor for driving the wheels of the truck, and an electric power source including battery packs and/or fuel cell units to store energy and power the electric motor.

### BRIEF DESCRIPTION OF THE DRAWINGS

The invention will be further elucidated in the figures:
FIG. 1 schematically illustrates an embodiment of a truck, comprising a bracket assembly;
FIGs. 2A-B illustrate embodiments of the truck in which the bracket assembly is combined with air springs of different types;
FIG. 3 illustrates a detailed embodiment of a bracket assembly, comprising a first and second bracket;
FIG. 4 illustrated another or further embodiment of the bracket assembly, combined with a reduced height air spring;
FIG. 5 illustrates an embodiment of a cross member of a bracket assembly as described herein;
FIGs 6A-B respectively provide a top view and a rear view of an embodiment of a bracket assembly as described herein;
FIG. 7 illustrates another or further embodiment of a bracket assembly as described herein, comprising a panhard rod;
FIGs. 8A-D provide front and rear views of various embodiments of a bracket as described herein.

### DETAILED DESCRIPTION

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

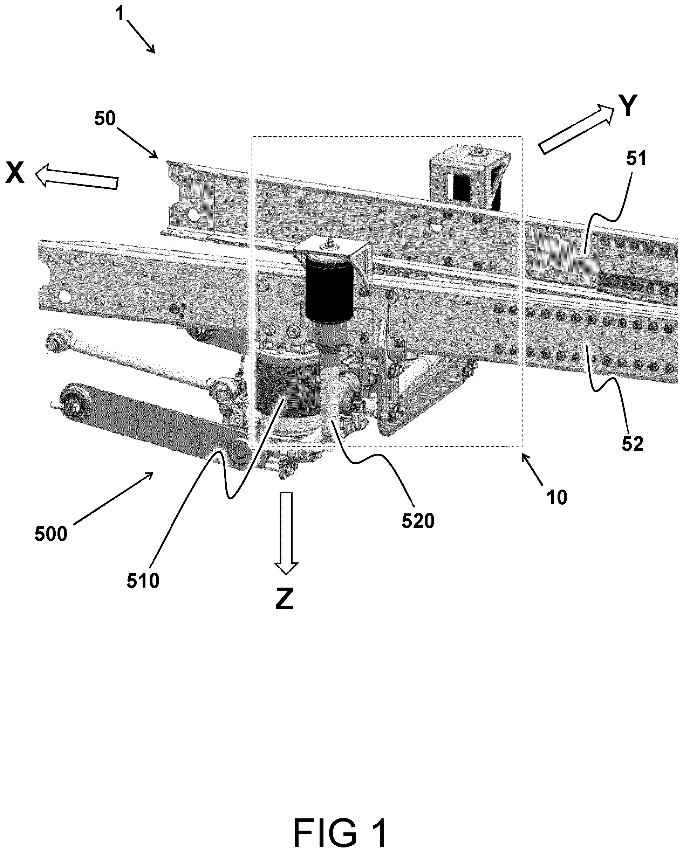

FIG 1 illustrates an embodiment of a vehicle 1, in particular a truck, comprising a chassis 50 with a pair of longitudinal chassis members 51, 52 that extend in a longitudinal direction X, also known as a ladder frame chassis, e.g. between a front axle and a rear axle of the truck. Typically, said axles extend laterally in a lateral direction Y below the pair of longitudinal chassis members 51, 52, e.g. for mounting wheels of the vehicle on opposing lateral sides of the chassis. Instead of a truck, the vehicle 1 may be a bus, a trailer, or any other type of commercial or utility vehicle. In particular, the vehicle may be an electric or hybrid electric vehicle, wherein the wheels are at least partially driven by an electric motor.

An air suspension system 500 is mounted between the chassis 50 and at least one of the axles of the vehicle 1. The air suspension system 500 comprises an air spring element 510 and a spring-damper unit 520 which together, as a pair of struts, are collaboratively arranged for movably suspending the chassis 50 to the axle in a vertical direction Z. A second pair of an air spring element and spring-damper unit is provided on an opposing side of the chassis. The axle may be a fully air suspended front axle of the vehicle, i.e. only suspended in the vertical direction Z by said air spring element 510 and spring-damper unit 520, e.g. to allow adaptively controlling various characteristics of the air suspension system, such as the ride height, the spring stiffness, and the damping coefficient. The air suspension system may be mounted between the front axle and the chassis, and arranged for suspending a load of at least 8000 kg, preferably at least 10000 kg, on the front axle. These relatively high front axle loads may need to be handled in (hybrid) electric vehicles, which generally have a larger weight compared to conventional ICE powered vehicles, e.g. due to battery packs and/or fuel cells on-board the vehicle.

As illustrated in FIG. 1, a bracket assembly 10 is mounted between the air suspension system 500 and the chassis 50, for coupling the air spring element 510 and spring-damper unit 520 to the pair of longitudinal chassis members 51, 52.

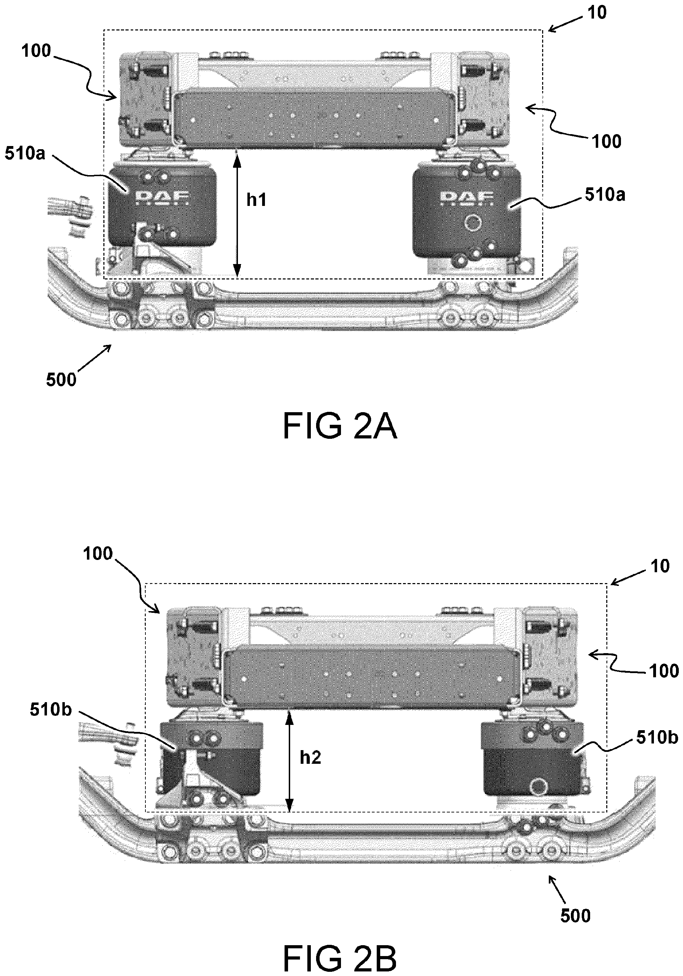

FIGs. 2A-B show that the bracket assembly 10 is compatible with different types of air springs 510a, 510b, and corresponding spring-damper units (not shown), e.g. to adapt the load carrying capacity of the truck and/or to lower or raise the ride height or road clearance of the truck. For example, FIG. 2A illustrates a first configuration in which the bracket assembly 10 is used with a conventional pair of air springs 510a that have a first nominal height h1, whereas in the second configuration depicted in FIG. 2B a different type of air springs 510b with a reduced, second nominal height h2. As illustrated, the second nominal height h2 is smaller than the first nominal height h1. As a result, the road clearance can be larger in the second configuration without changing the total height of the truck. Preferably, in case air springs 510b with a reduced height h2 are used, the air springs 510b are of the double loop type as known in the art, in which the bellow or outer skirt is expandable and contractable in two opposing axial directions, to increase the stroke without increasing the nominal axial length of the air spring. For example, the outer skirt or sleeve has a bottom section that is able to involute downwards to expand and contract over a first range, and a top section that is able involute upward to expand and contract over a second range, in addition to the first range. Accordingly, the reduced height air spring 510b can have the same spring travel as the conventional air spring 510a, to create additional design space for the axle body at the bottom without sacrificing the load carrying capacity of the suspension system 500.

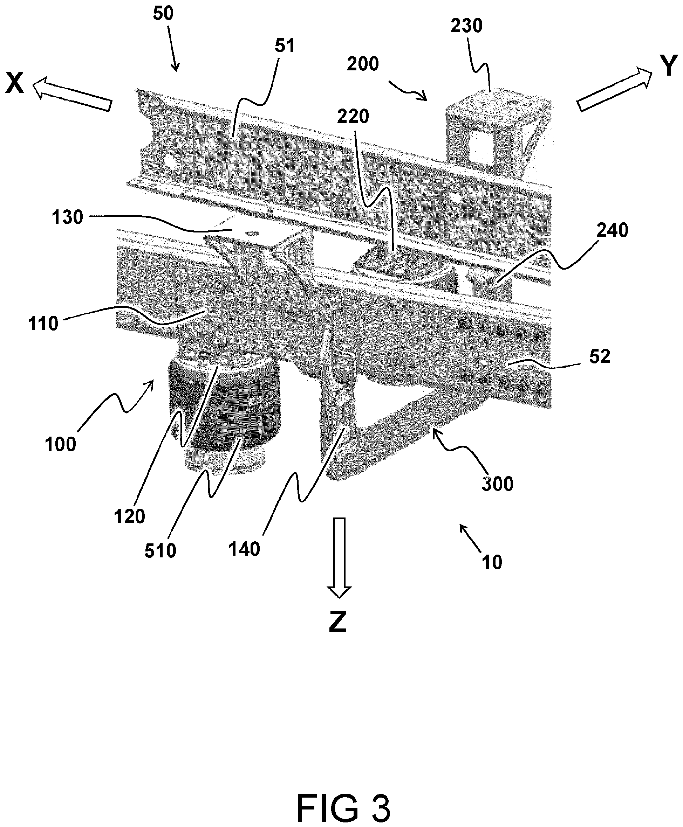

FIG. 3 illustrates in detail an embodiment of a bracket assembly 10, e.g. of a vehicle as described herein, for coupling the air suspension system to the chassis. The bracket assembly 10 comprises a first bracket 100 and a second bracket 200. The first and second brackets 100, 200 are illustrated in mounted position, the brackets having base plates, e.g. base plate 110, mounted to the chassis 50 of the truck. The chassis 50 comprises a pair of longitudinal chassis members 51, 52 extending in a longitudinal direction X, e.g. the driving direction of the vehicle. The base plate 110 of the bracket is mounted to a lateral side surface of the longitudinal chassis members, e.g. an outward facing surface, facing away from the vehicle. As such, the illustrated designs of the first and second brackets 100, 200 are mirrored with respect to each other, in that each base plate 110, 210 has a first section provided, in the driving direction X, at an upstream position on the longitudinal chassis members 51, 52. The base plates 110, 120 further each comprise a second section provided downstream the first section.

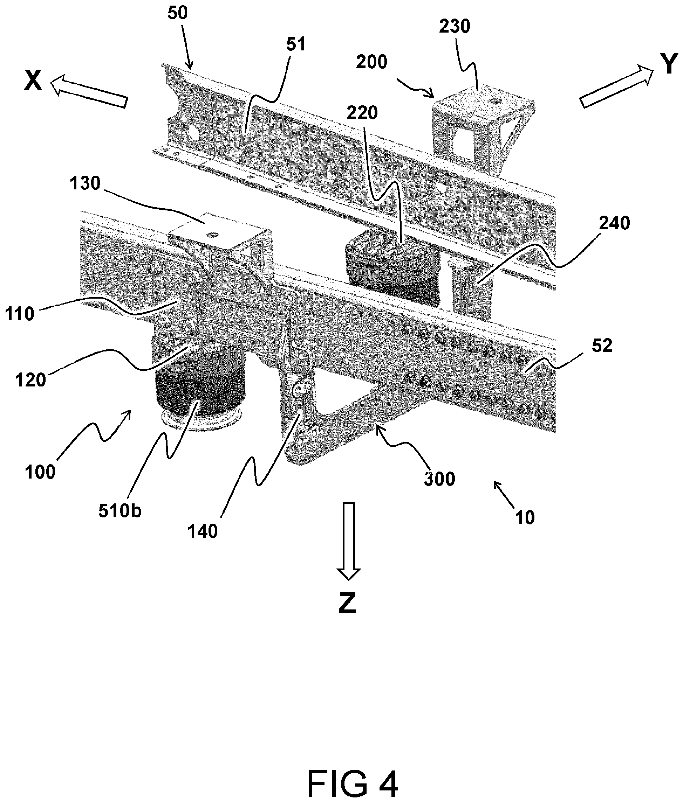

The first section e.g. comprises an air spring mount 120, 220 for mounting an air spring element 510 of the air suspension system, e.g. a conventional air spring 510a as also shown in FIG. 2A. To clarify that the type of air spring element is not intended to be limiting for the invention, FIG. 4 illustrates an embodiment of the bracket assembly 10 in combination with a reduced height air spring 510b as also illustrated in FIG. 2B.

The second section 112, 212 e.g. comprises a spring-damper mount 130, 230 for mounting a spring-damper unit (not shown) of the air suspension system. The air spring element and spring-damper unit are mounted, e.g. parallel to each other, between the chassis 50 and an axle of the truck that extends in a lateral direction Y below and across the longitudinal chassis members 51, 52. The axle may be a front axle of the truck. The air spring element and spring-damper unit are arranged for movably suspending the chassis to the axle in a vertical direction Z.

As illustrated, in the installed position of the bracket assembly 100, the air spring mounts 120, 220 extend in a first lateral direction, e.g. +Y, inwards towards the longitudinal chassis members. Accordingly, the air spring element 510 can be mounted below the longitudinal chassis member 51. The spring-damper mount 130, 230 extends in a second lateral direction, e.g. -Y, opposite to the first lateral direction, e.g. outwards away from the longitudinal chassis members, for mounting the spring-damper unit at a lateral offset from the longitudinal chassis member.

The second section 112, 212 further comprises a cross member mount 140, 240 for mounting a cross member between the longitudinal chassis members 51, 52. When the bracket assembly is installed on the truck, the cross member mount 140, 240 extends in a first vertical direction Z, e.g. downward toward the axle, for mounting the cross member at a vertical offset below the longitudinal chassis members 51, 52.

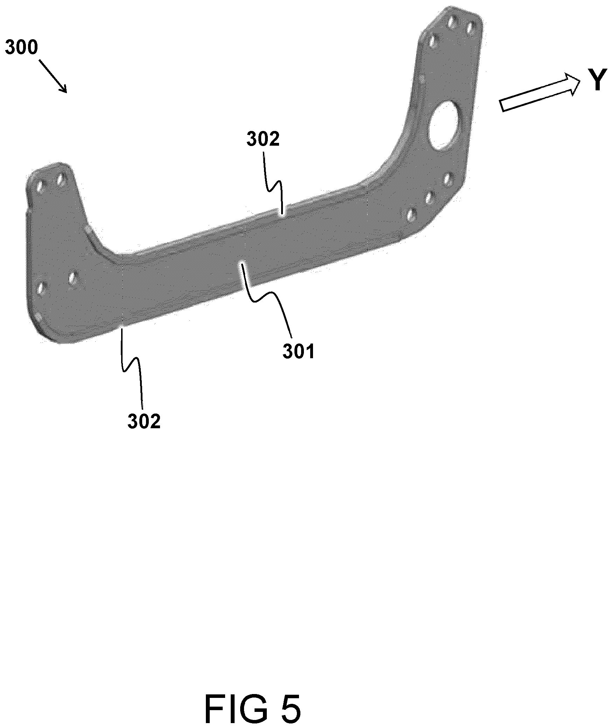

A cross member 300 is mounted to the cross member mounts of said first and second brackets, respectively, wherein, when installed on the truck, the cross member extends laterally across and at a vertical offset below the longitudinal chassis members. As shown in FIG. 5, the cross member 300 may be formed by a plate 301, e.g. an elongate or boomerang shaped plate, that may be reinforced with reinforcement elements 302, such as ribs or flanges, e.g. along its edges. Accordingly, the cross member 300 may have a cross section with an I or T shaped profile, to prevent out of plane bending or buckling of the cross member 300. At its outer ends, the cross member 300 may be provided with mounting or positioning holes for mounting the cross member 300 to the cross member mounts of the first and second bracket. By being coupled to a first and second bracket as described herein, a limited amount of force is guided through the cross member when counteracting torsional moments on the longitudinal chassis members. Accordingly, compared to conventional arrangements, the cross member 300 may have a relatively simple design compared to traditional cross members, which typically comprise a beam structure comprising at least two vertically oriented plate elements, such as a beam with a cross section that has a U-shaped or H-shaped profile. In the bracket assembly according to the present invention, such a rather sturdy and high weight component can be simplified by reducing the cross member to a single plate oriented vertically when mounted in the vehicle, comprising one or more horizontally oriented reinforcement elements, such as ribs or flanges, to prevent bending or buckling of the cross member. Accordingly, the reinforce plate may e.g. have an I shaped cross section or a T-shaped cross section.

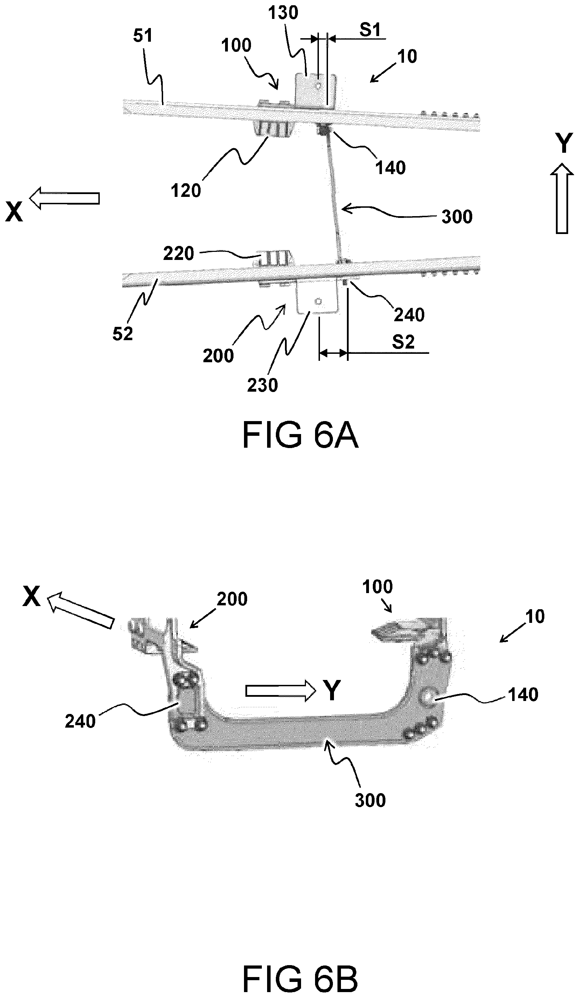

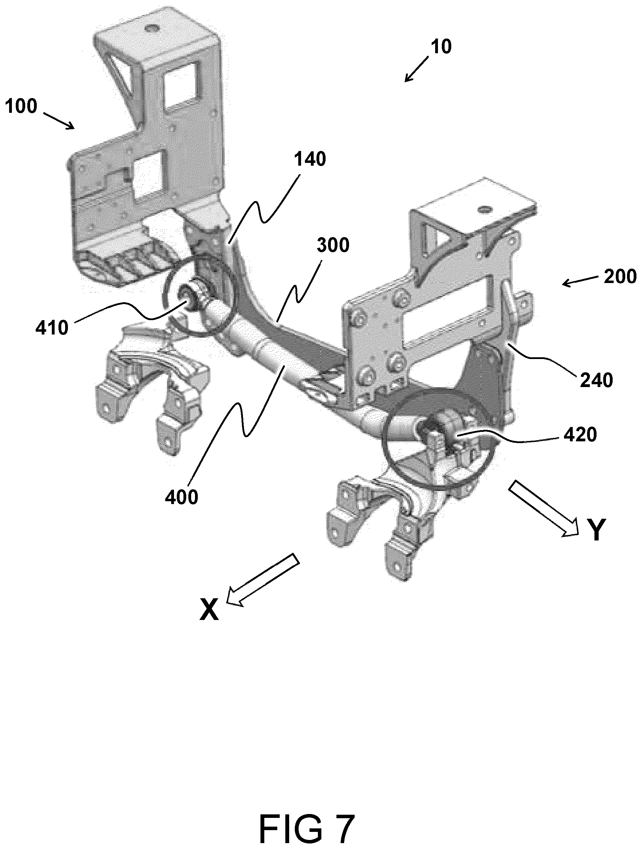

FIGs. 6A and 6B respectively provide a top view and a rear view of another or further embodiment of the bracket assembly 10, illustrating that the cross member 300 may be asymmetrically mounted to the first and second bracket 100, 200. The first bracket 100 is mounted to a first side of the cross member 300 facing a front of the truck, e.g. in the longitudinal driving direction X, and the second bracket 200 is mounted to a second side of the cross member 300 facing a rear of the truck, e.g. opposite the longitudinal driving direction X. FIG. 6A also shows that in the first bracket 100, the spring-damper mount 130 and the cross member mount 140 are provided with a first interdistance S 1 between each other in the longitudinal direction X, and that in the second bracket 200, the spring-damper mount 230 and the cross member mount 240 are provided with a second interdistance S2 between each other in the longitudinal direction X. The first and second interdistance S1, S2 deviate from each other, e.g. the first interdistance S1 is smaller than the second interdistance S2, or larger. Accordingly, when the air spring mounts and spring-damper mounts of the first and second bracket 100, 200 are mounted directly opposite to each other on the respective longitudinal chassis members 51, 52, the cross member mounts 140, 240 are displaced with respect to each other in the longitudinal direction X. In other words, the cross member mounts 140, 240 are not directly opposite to each other when installed on the vehicle, and the cross member 300 extends diagonally, e.g. at a slant, between the pair of longitudinal chassis members 51, 52. This configuration can be applied to free up space on one side of the bracket assembly, e.g. to accommodate other components, such as a panhard rod for constraining a lateral movement of the axle with respect to the chassis as illustrated in FIG. 7. Such a panhard rod 400 may comprise a first axial end 410 pivotably mounted to the first bracket 100, e.g. to the cross member mount 140 in particular, and a second axial end 420 that is pivotably mountable to the axle of the truck at a lateral offset from the first bracket 100, such that the panhard rod 400 extends in the lateral direction Y.

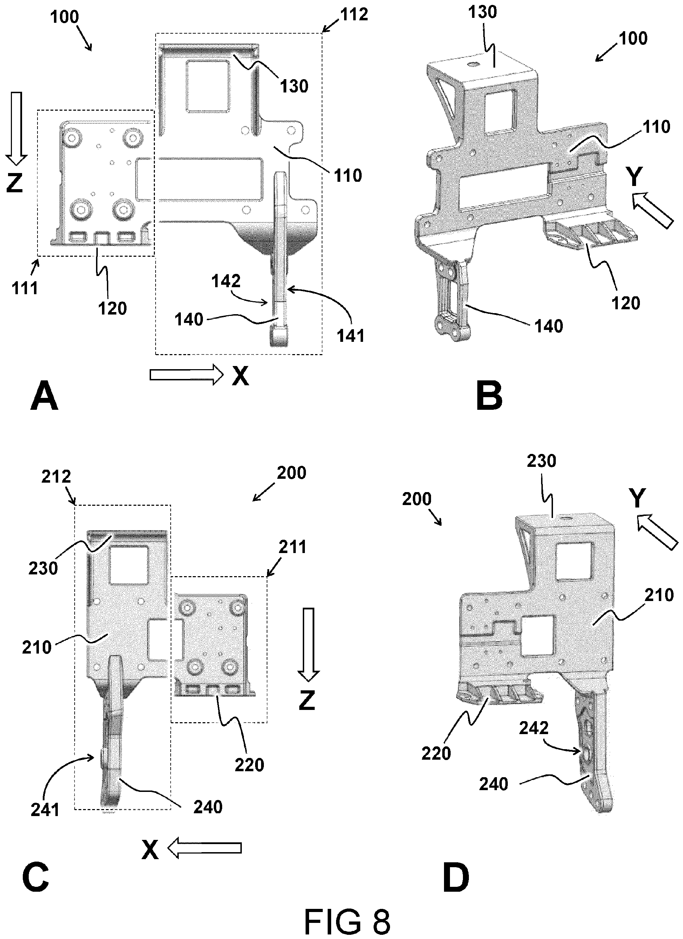

FIGs. 8A-D illustrate in more detail various embodiments of an individual bracket 100, 200 e.g. of a bracket assembly as described herein. FIGs. 8A and B respectively illustrate a front and rear side of a first bracket 100, while FIGs. 8C and D respectively illustrate a front and rear side of a second bracket 200.

The first bracket 100, 200 comprises a base plate 110, 210 that is mountable to a lateral side surface of one of the longitudinal chassis members, e.g. via a bolt connection. The base plate 110, 210 for example comprises a number of mounting holes for bolts or pins, while the longitudinal chassis member is provided with corresponding mounting holes. When mounted, the base plate 110 extends flat against the lateral side surface of the longitudinal chassis member, e.g. a side of the longitudinal chassis member that faces outward, away from the vehicle.

The base plate comprises a first section 111, 211 arranged for mounting an air spring element of an air suspension system, and a second section 112, 212 for mounting a spring-damper unit of the air suspension system. The second bracket 200 depicted in FIGs 8C-D has a design that is similar, yet mirrored with respect to the first bracket 100 depicted in FIGs 8A-B, in that when mounted on opposing lateral side surfaces of the longitudinal chassis members that face outward and away from each other, the first sections 111, 211 of both brackets 100, 200 may be provided upstream the respective second sections 112, 212 in the longitudinal driving direction X.

The first section 111 comprises an air spring mount 120 arranged for mounting the air spring element to the chassis. When installed on the vehicle, the air spring mount 120 extends in a first lateral direction, e.g. -Y, for mounting the air spring element below the longitudinal chassis member. Preferably, when mounted to the longitudinal chassis member, the air spring mount abuts a bottom surface of the longitudinal chassis member, and the air spring mount is substantially aligned with the longitudinal chassis member in the lateral direction. For example, the air spring mount 120 may lateral extend at least partially below the longitudinal chassis member, preferably at least beyond a longitudinal midplane at 50% of the lateral width of the longitudinal chassis member, or beyond 75% of the lateral width, to ensure that the chassis load is transmitted vertically onto the air spring unit, without inducing additional torsional moments or bending stresses in the bracket 100.

The second section 112 comprises a spring-damper mount 130 arranged for mounting the spring-damper unit to the chassis. When installed on the vehicle, the spring-damper mount 130 extends in a second lateral direction, e.g. +Y, opposite to the first lateral direction -Y for mounting the spring-damper unit at a lateral offset from the longitudinal chassis member. The spring-damper mount 130 may also extend vertically from the base plate 110 for mounting the spring-damper unit at a vertical offset above the longitudinal chassis members.

The second section 112 further comprises a cross member mount 140 for mounting a cross member between the longitudinal chassis members. When installed on the vehicle, the cross member mount 140 extends in a first vertical direction, e.g. +Z, for mounting the cross member at a vertical offset below the longitudinal chassis members.

The cross member mount 140 may comprise one or more upstanding ribs or flanges that extend laterally from the base plate 110, in order to provide a torsional reinforcement of the second section 112 for transferring a suspension force from the spring-damper unit to the cross member mount with limited deformation of the bracket when mounted to the longitudinal chassis member. For the same reason, the cross member mount 140 is preferably substantially aligned with the spring-damper mount 130 in the vertical direction Z, i.e. with a minimal interdistance between the cross member mount 140 and the spring-damper mount 130. Said interdistance can e.g. be less than 20 centimeters, e.g. between 0 and 15 centimeters, preferably less than 10 centimeters.

The cross member mount 140, 240 may comprise a substantially flat first mounting surface 141, 241 for mounting the cross member. As illustrated in FIGs 8A-D, the first mounting surface 141 is oriented normal to the longitudinal direction X. The cross member mount 140, 240 may further comprise a panhard rod mount 142, 242 for pivotably mounting a panhard rod to the chassis. The panhard rod mount can e.g. be provided on the first mounting surface, or on a second mounting surface of the cross member mount 140, e.g. opposite the first mounting surface 141.

Each of the brackets 100, 200 is preferably manufactured as a single piece, in that the base plate, the air spring mount, the spring-damper mount and the cross member mount are integrally formed as a single part, e.g. by injection molding, casting, die casting, additive manufacturing techniques such as 3D printing, or machining operations such as milling. The bracket 100, 200 may be provided with local inserts for locally reinforcing the bracket, e.g. at or near the air spring mount, the spring-damper mount, the cross member mount, and/or any mounting holes of the bracket.

It will be clear to the skilled person that the invention is not limited to any embodiment herein described and that modifications are possible which may be considered within the scope of the appended claims. Also, kinematic inversions are considered inherent to the invention disclosed herein. In the claims, any reference signs shall not be construed as limiting the claim.

The terms 'comprising' and 'including' when used in this description or the appended claims should not be construed in an exclusive or exhaustive sense but rather in an inclusive sense. Thus, expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean `at least one', and do not exclude a plurality. Features that are not specifically or explicitly described or claimed may additionally be included in the structure of the invention without departing from its scope.

Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extent that structure, material, or acts are considered to be essential they are inexpressively indicated as such. Additions, deletions, and modifications within the purview of the skilled person may generally be made without departing from the scope of the invention, as determined by the claims.

## Claims

1. A bracket for coupling an air suspension system of a truck to a chassis of the truck, wherein the chassis comprises a pair of longitudinal chassis members extending along a longitudinal direction, wherein the air suspension system comprises an air spring element and a spring-damper unit for movably suspending the chassis to an axle of the truck in a vertical direction, and wherein the axle laterally extends below the longitudinal chassis members, the bracket comprising a base plate that is mountable to a lateral side surface of one of the longitudinal chassis members, said base plate comprising a first section arranged for mounting the air spring element, and a second section for mounting the spring-damper unit;
wherein the first section comprises an air spring mount arranged for mounting the air spring element to the chassis, wherein, when installed on the truck, the air spring mount extends in a first lateral direction for mounting the air spring element below the longitudinal chassis member;
wherein the second section comprises a spring-damper mount arranged for mounting the spring-damper unit to the chassis, wherein, when installed on the truck, the spring-damper mount extends in a second lateral direction opposite to the first lateral direction for mounting the spring-damper unit besides the air spring element, at a lateral offset from the longitudinal chassis member;
wherein the second section further comprises a cross member mount for mounting a cross member between the longitudinal chassis members, wherein, when installed on the truck, the cross member mount extends in a first vertical direction for mounting the cross member at a vertical offset below the longitudinal chassis members.

2. The bracket according to claim 1, wherein the cross member mount provides a torsional reinforcement of the second section for transferring a suspension force from the spring-damper unit to the cross member.

3. The bracket according to any preceding claim, wherein the cross member mount is substantially aligned with the spring-damper mount in the longitudinal direction.

4. The bracket according to any preceding claim, wherein the cross member mount comprises a substantially flat mounting surface for mounting the cross member, wherein said mounting surface is normal to the longitudinal direction.

5. The bracket according to any preceding claim, wherein, when installed on the truck, the spring-damper mount extends in a second vertical direction opposite to the first vertical direction for mounting the spring-damper unit at a vertical offset above the longitudinal chassis members.

6. The bracket according to any preceding claim, wherein, when installed on the truck, the air spring mount abuts a bottom surface of the longitudinal chassis member, wherein the air spring mount is substantially aligned with the longitudinal chassis member in the lateral direction.

7. The bracket according to any preceding claim, wherein the cross member mount comprises a panhard rod mount for pivotably mounting a panhard rod to the chassis.

8. The bracket according to any preceding claim, wherein the base plate, the air spring mount, the spring-damper mount and the cross member mount are integrally formed as a single part.

9. A bracket assembly, comprising:
- a first bracket according to any of the preceding claims, the base plate of said first bracket arranged for mounting to a first lateral side surface of one of the longitudinal chassis members;
- a second bracket according to any of the preceding claims, the base plate of said second bracket arranged for mounting to a second lateral side surface of the other of the longitudinal chassis members facing away from the first lateral side surface;
- a cross member mounted to the cross member mounts of said first and second brackets, respectively, wherein, when installed on the truck, the cross member extends laterally across and at a vertical offset below the longitudinal chassis members.

10. The bracket assembly according to claim 9, wherein the cross member is a reinforced plate.

11. The bracket assembly according to claim 9 or 10, wherein the first and/or second bracket comprises an asymmetry for asymmetrically mounting the cross member to the respective cross member mounts of the first and second bracket, wherein, when installed on the truck, the cross member mount of the first bracket is mounted to a first side of the cross member facing a front of the truck, and wherein the cross member mount of the second bracket is mounted to a second side of the cross member facing a rear of the truck.

12. The bracket assembly according to any of claims 9-11, wherein, in the first bracket, the spring-damper mount and the cross member mount are provided with a first interdistance between each other in the longitudinal direction, wherein, in the second bracket, the spring-damper mount and the cross member are provided with a second interdistance between each other in the longitudinal direction, deviating from the first interdistance.

13. The bracket assembly according to any of claims 9-12, further comprising a panhard rod for constraining a lateral movement of the axle with respect to the chassis, wherein the panhard rod comprises a first axial end mounted to the first bracket and a second axial end mountable to the axle of the truck at a lateral offset from the first bracket.

14. A truck, comprising:
- a chassis comprising a pair of longitudinal chassis members extending along a longitudinal direction;
- an air suspension system comprising an air spring element and a spring-damper unit movably suspending the chassis to an axle of the truck in a vertical direction, wherein the axle laterally extends below the pair of longitudinal chassis members; and
- a bracket assembly according to any of the preceding claims coupling the air spring element and spring-damper unit to the chassis.

15. The truck according to claim 14, wherein the axle is a fully air suspended front axle of the truck, and wherein the air suspension system is arranged for suspending a chassis load of at least 8000 kg, preferably at least 10000 kg, on the front axle.
